Europäisches Patentamt

(19) European Patent Office

Office européen des brevets

(11) Numéro de publication: **0159537 B1**

(12) **FASCICULE DE BREVET EUROPEEN**

(45) Date de publication du fascicule du brevet:
**11.05.88**

(21) Numéro de dépôt: **85103227.6**

(22) Date de dépôt: **20.03.85**

(51) Int. Cl.⁴: **B 29 D 30/56**

(54) Procédé de collage de deux corps en caoutchouc par vulcanisation d'une couche de liaison et produits adaptés pour l'utilisation d'un tel procédé.

(30) Priorité: 09.04.84 FR 8405709
15.11.84 FR 8417578

(43) Date de publication de la demande:
30.10.85 Bulletin 85/44

(45) Mention de la délivrance du brevet:
11.05.88 Bulletin 88/19

(84) Etats contractants désignés:
AT BE CH DE FR GB IT LI LU NL SE

(56) Documents cités:
CH - A - 498 711
DE - B - 1 239 088
FR - A - 2 198 829
GB - A - 746 375
LU - A - 42 649
US - A - 2 966 936
US - A - 4 092 203

(73) Titulaire: MICHELIN & CIE (Compagnie Générale des Etablissements Michelin) Société dite:, 4 rue du Terrail, F-63000 Clermont-Ferrand (FR)

(72) Inventeur: Remond, Michel, Berzet Saint-Genès-Champanelle, F-63122 Ceyrat (FR)
Inventeur: Rossignol, Bernard, 2 rue de Pont de l'Etang Châteaugay, F-631000 Clermont-Ferrand (FR)
Inventeur: Serrano, Alain, 7 rue Henri Pourrat, F-63670 Orcet (FR)

(74) Mandataire: Renaudie, Jacques et al, Michelin & Cie Service K. Brevets, F-63040 Clermont-Ferrand Cédex (FR)

## Description

La présente invention a pour objet un procédé de collage de deux corps en caoutchouc vulcanisé ou vulcanisable. Elle se rapporte notamment à la fixation d'une bande de roulement sur une enveloppe de pneumatique ou sur un bandage élastique, au moment de la fabrication ou bien au cours d'une rénovation ultérieure qui peut être une réparation locale ou un rechapage. Plus particulièrement, elle concerne les procédés de rénovation «hors moule», c'est-à-dire ceux utilisant une bande de roulement (complète ou en éléments) prémoulée, non vulcanisée, partiellement vulcanisée ou vulcanisée. L'invention a également pour objet un corps en caoutchouc adapté pour ledit procédé de collage, notamment une bande de roulement ou un élément de bande de roulement.

Un premier procédé de collage connu, appliqué à la rénovation des bandes de roulement, fait l'objet du brevet US-A-2966936 qui décrit un procédé et un corps en caoutchouc du type énoncé dans le préambule des revendications 1, 2 et 6. Il consiste à appliquer, sur la carcasse à rénover, une bande de roulement prévulcanisée avec interposition d'une couche de gomme de liaison vulcanisable, à évacuer les inclusions gazeuses et à vulcaniser l'empilage ainsi réalisé. Ce procédé prévoit d'introduire l'ensemble à vulcaniser dans une gaine souple comportant une valve par laquelle on évacue lesdites inclusions gazeuses.

Le but poursuivi est d'obtenir une très forte adhérence entre la bande de roulement et la carcasse sur laquelle elle est disposée. Pour assurer une liaison aussi résistante que possible, il importe que les gaz ou vapeurs inévitablement présents entre les deux faces à assembler, ou résultant de la réaction de vulcanisation, soit retirés pratiquement en totalité afin qu'aucune inclusion gazeuse ne compromette la bonne tenue de l'assemblage. De plus, pendant la vulcanisation, il faut éviter l'infiltration du fluide de chauffage au niveau de la gomme de liaison, et permettre l'évacuation des gaz restants ou résultant de la réaction de vulcanisation.

Plus précisément, il faut évacuer les gaz inclus vers les extrémités de la couche de gomme de liaison, situées à chaque épaulement. Après évacuation des gaz inclus, il faut éviter que le fluide de chauffage puisse pénétrer dans la gomme de liaison par ces mêmes extrémités. C'est le rôle de la gaine souple et étanche dans laquelle on introduit l'ensemble à vulcaniser. Une partie de l'air emprisonné est chassé par rouletage. On raccorde la gaine souple et étanche à une source de vide pour aspirer les gaz inclus le plus complètement possible. On place ensuite l'ensemble à rénover, introduit dans la gaine souple, dans une enceinte de chauffage, pour assurer la vulcanisation de la gomme de liaison. Le cas échéant, la gaine souple est maintenue raccordée à une source de vide, ou à une zone en dépression par rapport à la pression de l'enceinte de vulcanisation. La gaine souple et étanche empêche toute infiltration du fluide de chauffage. Ce procédé présente de nombreux inconvénients liés à l'emploi de la gaine: manipulations nombreuses et fastidieuses, faible durée de vie de la gaine, obligation de disposer d'accessoires supplémentaires lorsque l'on utilise une gaine partielle n'enveloppant pas totalement l'ensemble à vulcaniser.

On connaît aussi un second procédé de collage appliqué à la rénovation des pneumatiques, décrit par le brevet US 3689337. Ce procédé n'utilise pas de gaine souple et étanche, ou du moins, ne la maintient pas dans l'enceinte de vulcanisation. Il propose d'assurer l'étanchéité requise en produisant une liaison, chimiquement ou mécaniquement, sur les extrémités de la couche de gomme de liaison. Selon ce procédé, il faut donc d'abord chasser l'air inclus entre la bande de roulement et la carcasse. Cela peut se faire par rouletage et/ou en utilisant une gaine souple et étanche, recouvrant la bande de roulement et partiellement les flancs. Il faut assurer l'étanchéité entre la gaine et les flancs. On raccorde la gaine à une source de vide, ce qui, par aspiration, évacue l'air inclus. Quelle que soit la méthode employée pour évacuer l'air, ce second procédé prévoit de rendre les extrémités étanches (à l'air et au fluide de chauffage) en fermant lesdites extrémités par recouvrement avec une matière adéquate, ou par vulcanisation locale. Ainsi, la carcasse recouverte de la gomme de liaison et munie d'une bande de roulement peut être introduite sans autre accessoire dans l'enceinte de chauffage pour assurer la vulcanisation de la gomme de liaison.

Ces procédés connus ne donnent pas toujours des résultats satisfaisants. En particulier, le second procédé ne permet pas d'évacuer totalement les gaz présents dans la gomme de liaison, ou produits lors de la réaction de vulcanisation.

Par le brevet GB 746375, on connaît également un corps en caoutchouc spécialement adapté au rechapage avec une gaine souple. Ledit corps comporte des canalisations à fond de sculpture et des canaux disposés sur la semelle de la bande de roulement, lesdits canaux ne débouchant pas sur les bord latéraux de la bande de roulement et conduisant les inclusions gazeuses vers lesdites canalisations.

Le but de la présente invention est de fournir un procédé permettant de faire adhérer très solidement une face d'un premier corps en caoutchouc sur une face d'un autre corps en caoutchouc en s'affranchissant de toute utilisation de gaine souple.

Un autre but de l'invention est de fournir un corps en caoutchouc particulièrement bien adapté pour l'application du procédé de collage selon l'invention.

La présente invention a donc pour objet un procédé de collage d'une face d'un premier corps en caoutchouc sur une face d'un second corps en caoutchouc consistant à

a) appliquer ladite face dudit premier corps en caoutchouc sur ladite face dudit second corps avec interposition d'une couche de gomme de liaison vulcanisable,

b) évacuer les inclusions gazeuses emprisonnées entre lesdits corps en caoutchouc et/ou résultant de la réaction de vulcanisation subséquente vers au moins un orifice aménagé sur au moins une desdites faces, ledit orifice étant la base d'une canalisation passant au travers d'au moins un desdits corps en caoutchouc, ladite évacuation se faisant par aspiration au travers de ladite canalisation,

c) vulcaniser l'empilage ainsi réalisé, caractérisé en ce que ladite aspiration se fait grâce à un tuyau branché directement à ladite canalisation passant au travers dudit corps.

La présente invention a également pour objet un procédé de collage d'une face d'un premier corps en caoutchouc sur une face d'un second corps en caoutchouc consistant à

a) appliquer ladite face dudit premier corps sur ladite face dudit second corps avec interposition d'une couche de gomme de liaison vulcanisable,

b) évacuer les inclusions gazeuses emprisonnées entre lesdits corps en caoutchouc et/ou résultant de la réaction de vulcanisation subséquente,

c) vulcaniser l'empilage ainsi réalisé, caractérisé en ce que

a) on applique ladite face dudit premier corps sur ladite face dudit second corps dans un environnement où règne une pression $p_1$,

b) on évacue les inclusions gazeuses vers au moins un orifice aménagé sur au moins une desdites faces, ledit orifice étant prolongé par un trou borgne, ladite évacuation se faisant dans une enceinte où règne une pression $p_2$ supérieure à la pression $p_1$.

La présente invention a enfin pour objet un corps en caoutchouc dont l'une des faces qui est destinée à être collée sur une face d'un autre corps en caoutchouc est pourvue de moyens de drainage des inclusions gazeuses ne débouchant pas aux bords de ladite face, et conduisant à au moins un orifice aménagé sur ladite face, caractérisé par le fait que ledit orifice est prolongé par un trou borgne.

Ledit procédé de collage s'applique notamment, mais pas exclusivement, à la fabrication et à la rénovation d'enveloppes de pneumatiques. Bien que la description qui suit se rapporte seulement au rechapage, il doit être entendu que l'invention peut être mise en œuvre toutes les fois qu'il s'agit de faire coller l'une sur l'autre les faces de corps en caoutchouc vulcanisé ou vulcanisable, au moyen d'une couche de gomme de liaison vulcanisable.

La figure 1 est une vue en coupe d'une enveloppe de pneumatique comportant un assemblage à vulcaniser.

La figure 2 est une vue partielle d'une semelle de bande de roulement.

La figure 3 est une coupe suivant l'axe A, A à la figure 2.

La figure 4 est une vue en coupe d'un assemblage à vulcaniser, muni d'un dispositif d'aspiration.

Les figures 5, 6, 7 représentent des variantes de réalisation d'assemblages à vulcaniser.

La figure 8 est une vue en coupe d'une barrette appliquée sur une carcasse et munie d'un dispositif d'aspiration.

Les figures 9 et 10 montrent la semelle d'un secteur de bande de roulement.

La figure 11 est une coupe suivant l'axe B, B à la figure 10.

La figure 12 est une vue en coupe d'un assemblage à vulcaniser, illustrant une variante du procédé de collage selon l'invention.

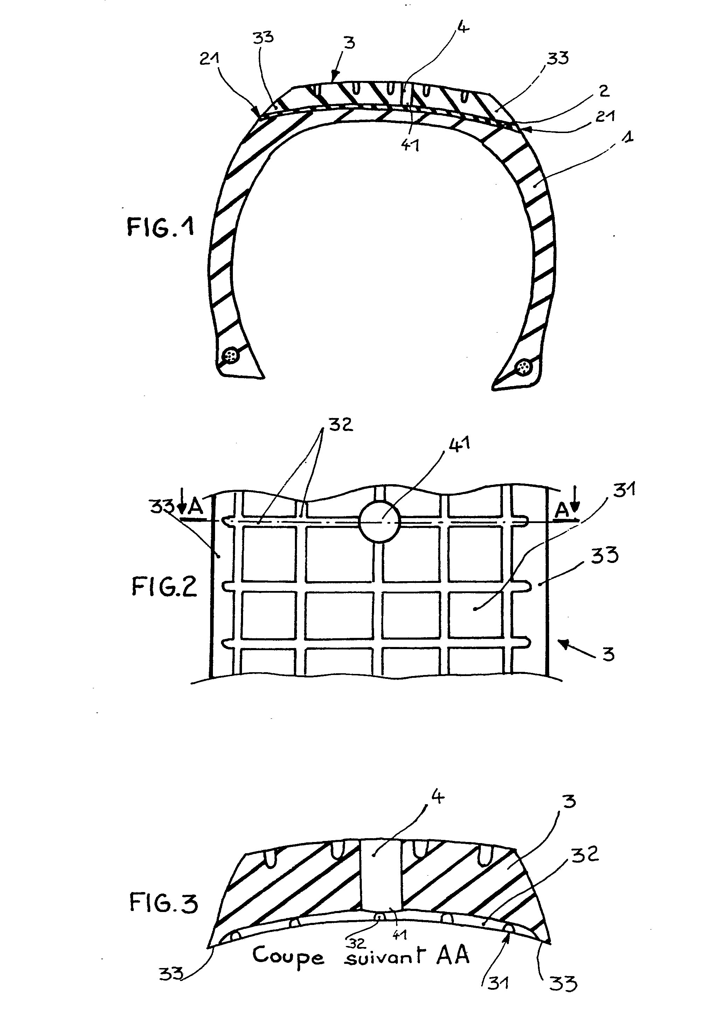

La figure 1 permet de mieux comprendre le principe de fonctionnement du procédé de collage selon l'invention. On y voit une carcasse 1, une couche de gomme de liaison vulcanisable 2, et une bande de roulement 3. Le procédé de collage appliqué à la rénovation des bandes de roulement «hors moule» permet d'évacuer les gaz au niveau de la gomme de liaison 2 de manière très efficace tout en supprimant l'utilisation d'une gaine souple. On évacue les inclusions gazeuses vers au moins un orifice 41 aménagé sur la semelle 31 de la bande de roulement 3. Ledit orifice 41 est la base d'une canalisation 4 percée au travers de la bande de roulement. Ladite évacuation des inclusions gazeuses se fait par aspiration au travers de ladite canalisation. En quelque sorte, la bande de roulement joue le rôle des gaines souples connues dans l'état de la technique.

On a constaté de manière inattendue qu'il n'est pas toujours nécessaire d'améliorer la fermeture des extrémités 21. Il suffit que, après application de la bande de roulement sur la carcasse révêtue de la gomme de liaison, au moins les bords 33 de ladite bande de roulement soient en bonne complémentarité de forme avec la carcasse. La demanderesse pense que l'amélioration surprenante de l'efficacité de l'évacuation des inclusions gazeuses est due à la diminution des pertes de charges grâce à l'aspiration par une ou plusieurs canalisations 4 en lieu et place de l'aspiration au travers des extrémités 21 de la couche de gomme de liaison 2. Cette aspiration peut être effectuée avant la vulcanisation, elle peut être maintenue lors de la vulcanisation ou elle peut être effectuée uniquement lors de la vulcanisation en étuve tout en simplifiant considérablement cette étape par rapport aux procédés usuels. En effet, il suffit de brancher un tuyau flexible à une ou quelques canalisations 4 pour les maintenir à une pression inférieure à celle régnant dans l'enceinte dans laquelle se trouve l'assemblage à vulcaniser.

Dans certains cas, par exemple lorsque la complémentarité de forme des faces à assembler est mauvaise, il peut être avantageux de fermer les extrémités 21 de la couche de gomme de liaison en produisant chimiquement ou mécaniquement une liaison étanche. Cela peut se faire, par exemple en recouvrant lesdites extrémités 21 avec une matière adéquate ou en vulcanisant localement. L'aspiration des gaz inclus a lieu, selon une caractéristique essentielle de l'invention, après la fermeture des extrémités 21 de la couche de gomme de liaison.

La figure 2 représente partiellement la semelle 31 d'une bande de roulement 3 convenant particulièrement bien à la mise en œuvre du procédé de collage selon l'invention. On y voit un réseau de canaux 32 destinés à améliorer le drainage des gaz. Ces canaux 32 ne débouchent pas aux bords latéraux 33. Il est ainsi superflu d'améliorer l'étanchéité au niveau des extrémités 21 de la couche de gomme de liaison (voir figure 1). Les canaux 32 collectent l'air ou les gaz résultant de la vulcanisation sur toute la surface de la gomme de liaison et drainent ces gaz vers un orifice 41.

Pour une bande de roulement annulaire, les canaux 32 peuvent être interrompus circonférentiellement, notamment à l'endroit de la soudure si l'anneau est obtenu par aboutement d'une bande préparée à plat. Il y a au moins un orifice 41 par zone ou les canaux 32 forment un réseau ininterrompu. Chaque orifice 41 est la base d'une canalisation 4.

On peut aussi prévoir une ou plusieurs canalisations 4 axialement, que les canaux 32 soient interrompus axialement ou non. La densité minimale (ou nombre de canaux par unité de surface) du réseau de canaux 32 doit être déterminé expérimentalement. Elle est bien sûr notamment fonction de la nature de la gomme de liaison 2 et des dimensions des canaux 32. La profondeur de ceux-ci, dans le sens de l'épaisseur de la bande de roulement, est de préférence comprise entre 0,5 mm et 3 mm.

La figure 3 montre une coupe transversale dans la même bande de roulement 3, passant par un canal 32. On voit que le canal 32 ne débouche pas aux extrémités latérales 33 de la bande de roulement. Il crée un chemin d'évacuation des gaz, vers l'orifice 41, puis vers la canalisation 4 passant au travers de la bande de roulement 3. La forme de la canalisation 4 est quelconque. Elle peut déboucher à n'importe quel endroit de la semelle 31 et peut déboucher à n'importe quel endroit de la bande de roulement 3.

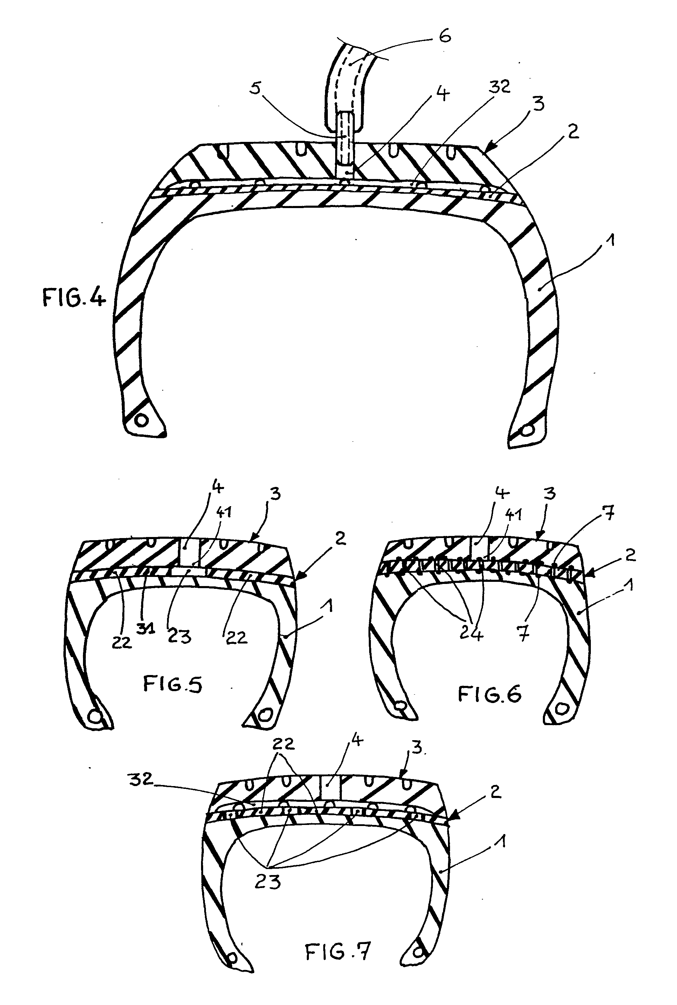

La figure 4 illustre schématiquement une manière préférable de mise en œuvre du procédé de collage selon l'invention. On voit une bande de roulement 3 prémoulée, du type de celle décrite ci-vant, appliquée sur une carcasse 1 au moyen d'une couche de gomme de liaison vulcanisable 2. Comme connu, la carcasse a été au préalable préparée de manière adéquate. Une canule 5 est emmanchée dans une canalisation 4 aménagée au travers de la bande de roulement 3. Cette canule 5 est reliée par l'intermédiaire d'un tuyau flexible 6 à une source de vide ou à toute zone où règne une pression inférieure à celle de l'enceinte où se trouve disposé l'assemblage constitué par la carcasse 1, la gomme de liaison 2 et la bande de roulement 3. On procède ainsi à l'apiration et l'évacuation des gaz au niveau de la gomme de liaison. De préférence, ce raccordement à une zone en dépression est maintenu pendant la cuisson dans l'enceinte de vulcanisation. L'évacuation de l'air et/ou des gaz provenant de la réaction de vulcanisation est favorisée par le réseau de canaux 32 aménagés sur la semelle de la bande de roulement. Ces canaux s'emplissent progressivement, totalement ou partiellement, de gomme provenant de la couche de liaison, pendant la phase visqueuse de passage à l'état plastique de ladite gomme de liaison. Cette gomme remonte également dans la canalisation 4. On réalise plusieurs canalisations 4 disposées circonférentiellement, chacune drainant les produits gazeux sous une zone sectorielle de la bande de roulement. On a constaté expérimentalement que, en général, il suffit de prévoir une seule canalisation 4 transversalement, même pour les plus grandes enveloppes de pneumatique pour poids-lourds. Cependant, le procédé n'est nullement limitatif et on peut en disposer plusieurs, notamment pour les plus grandes enveloppes de génie-civil.

On peut également utiliser des bandes de roulement ou des parties de bande de roulement qui ne comportent pas de réseau de canaux imprimé sur leur semelle. Dans ce cas, la semelle est préparée, de manière connue en soi, par cardage ou brossage pour obtenir une «rugosité» sur une surface ne s'étendant pas jusqu'aux bords latéraux 33, selon une caractéristique essentielle de l'invention. On entend par « rugosité» un état de surface dont l'amplitude de la variation crête à crête est très supérieure à la «valeur finale» de la variation crête à crête mesurée à la surface desdits bords 33. On entend par «valeur finale» celle mesurée après une éventuelle préparation de la surface desdits bords par brossage, de manière usuelle, dont le seul but est de favoriser l'adhésion, sans créer de chemin de passage pour l'air.

Les figures 5 à 7 illustrent diverses variantes apportées au procédé décrit ci-dessus. Le drainage de l'air au sein de la gomme de liaison 2 y est assuré différemment.

Sur la figure 5, la gomme de liaison 2 est posée en deux couches latérales 22 laissant un espace libre central et circonférentiel 23, juste sous les orifices 41 disposés circonférentiellement. La semelle 31 de la bande de roulement 3 ne comporte pas de canaux 32. L'aspiration des gaz se fait au niveau des deux faces des couches de liaison 22.

Sur la figure 6, le drainage est assuré par deux filets de mèches textiles 7 disposées de part et d'autre de la couche de gomme de liaison, en coopération avec des petits trous 24 dans la gomme de liaison 2. Les produits en phase gazeuse y trouvent un chemin conduisant vers les canalisations 4. Dans le cas considéré, il y a des mèches transversales (non figurées) qui relient entre elles les mèches circonférentielles. Ces mèches transversales ne débouchent pas aux extrémités latérales, selon une caractéristique essentielle du procédé de collage selon l'invention.

Sur la figure 7, la gomme de liaison 2 est disposée en couches circonférentielles séparées 22, laissant des espaces libres 23 qui communiquent avec des canaux transversaux 32 aménagés sous la semelle de la bande de roulement 3 au niveau de chaque orifice 41. On retrouve un réseau de chemins ne débouchant pas sur les faces latérales, et drainant l'air vers les orifices 41, puis vers les canalisations 4.

Les moyens décrits montrent comment il est possible de réaliser le drainage et l'évacuation des inclusions gazeuses au sein de la gomme de liaison. On peut bien sûr utiliser tout moyen équivalent, ou une combinaison de moyens favorisant le drainage. Ces moyens peuvent aussi être disposés sur la carcasse; ils ne débouchent pas sur les faces latérales ou extrémités de la couche de gomme de liaison, il conduisent à un ou plusieurs orifices 41 aménagés sur la semelle de la bande de roulement.

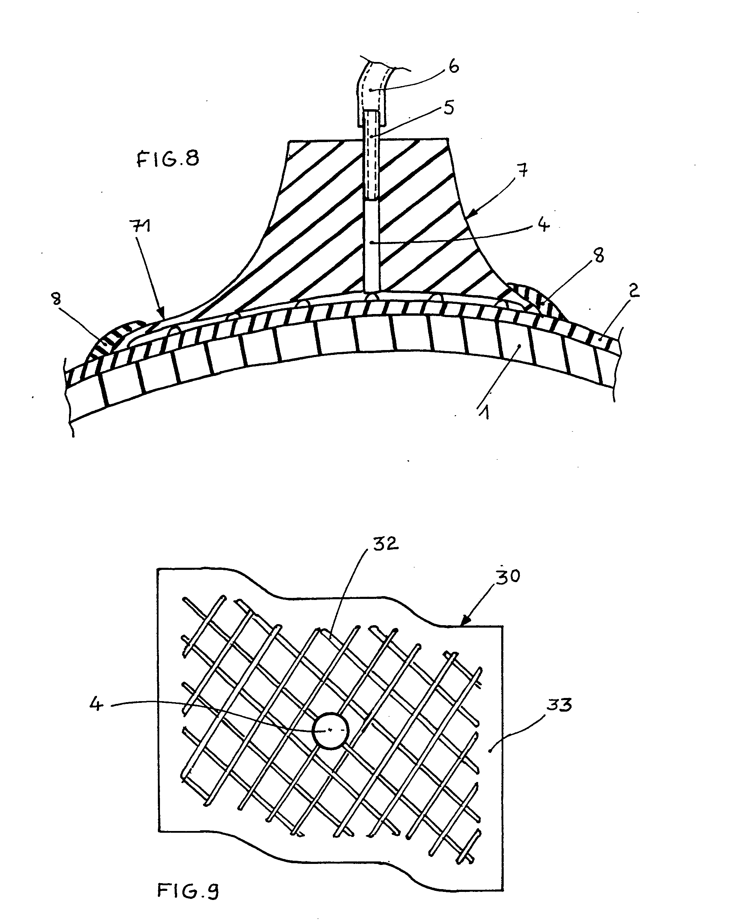

La figure 8 montre l'application au collage d'une barrette 7 du genre de celles utilisées pour les enveloppes de tracteur agricole. La barrette 7, dans laquelle on a percé une canalisation 4, est appliquée sur la carcasse 1 revêtue de la gomme de liaison en caoutchouc vulcanisable 2. Les ailes latérales 71 de la barrette sont fermement appliquées par rouletage. Etant donné la grande longueur des extrémités libres de la couche de gomme de liaison 2, il peut être avantageux d'améliorer leur fermeture par application d'une matière adéquate 8, comme décrit par exemple dans le brevet FR 2496004 ou dans le brevet FR 2529633. Une canule 5 est emmanchée dans la canalisation 4 et on branche un tuyau flexible 6 pour raccorder la zone de collage à une enceinte en dépression par rapport à la pression de l'enceinte dans laquelle se trouve l'ensemble à coller. La suite des opérations est similaire à ce qui a été décrit ci-dessus.

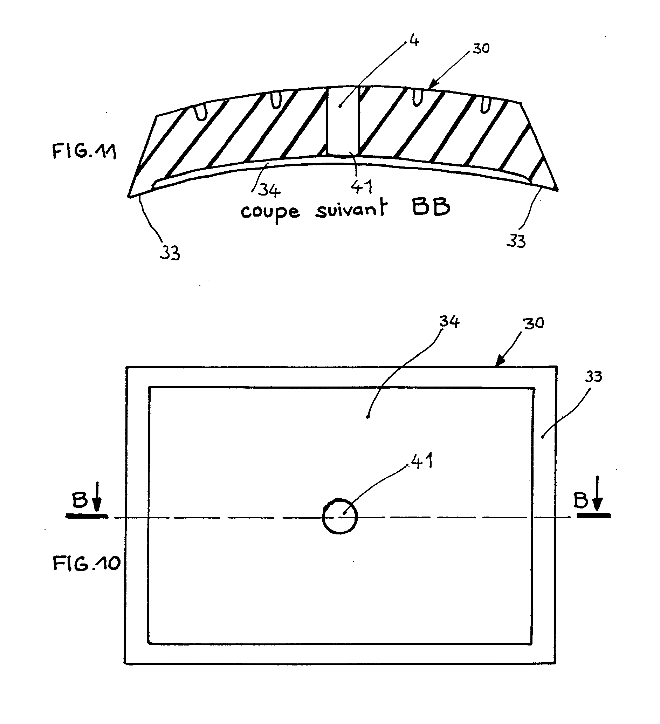

La figure 9 montre une variante de réalisation d'une semelle d'un secteur 30 de bande de roulement adapté pour le procédé de collage selon l'invention. Le réseau de canaux 32 est réalisé par une matrice qui imprime un quadrillage ne débouchant sur aucun des côtés 33 et conduisant à au moins un orifice 41. L'orientation des canaux peut être quelconque et variable. La densité du réseau et les dimensions des canaux sont quelconques. Une valeur minimale de cette densité doit être déterminée expérimentalement et est notamment fonction des dimensions des canaux et de la nature de la gomme de liaison. Ce réseau peut être réalisé par tous moyens convenables. Par exemple, il peut être imprimé directement sur le moule, ou être imprimé au moment du moulage par un insert amovible. Il peut également être imprimé au moment du moulage par un insert qui n'est retiré qu'au moment de l'utilisation du secteur pour le procédé de collage.

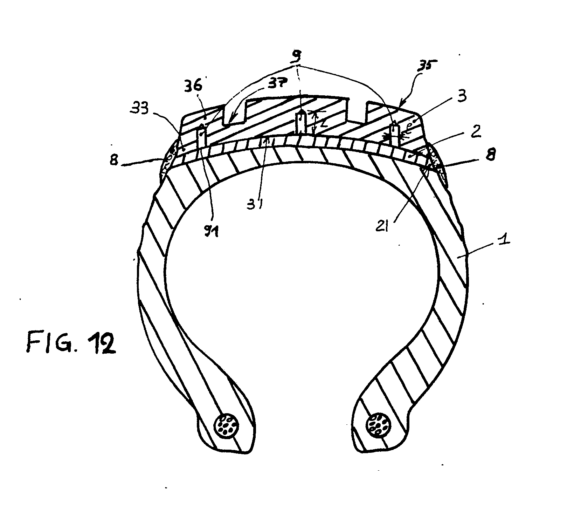

Les figures 10 et 11 montrent une autre variante de réalisation de la semelle très avantageuse pour une barrette ou un secteur 30 de bande de roulement. Le réseau de canaux est remplacé par une zone 34 réalisée en creux par rapport aux bords 33 de la semelle dudit secteur 30. Les bords 33 appliqués sur la gomme de liaison assurent une étanchéité suffisante. L'espace laissé par la zone 34 permet l'aspiration des inclusions gazeuses vers un orifice 41. Le secteur s'applique par succion à la manière d'une ventouse. Cette manière de réaliser la semelle peut aussi être adoptée pour une bande de roulement, de préférence uniquement si elle n'est pas très large.

Une autre manière avantageuse de réaliser une zone de drainage des inclusions gazeuses est d'opérer un brossage ou un cardage de cette zone 34. Au départ, cette zone est au même niveau que les bords 33. Par brossage ou cardage, on réalise une rugosité. Le terme «rugosité» a été défini plus haut. De préférence, l'amplitude de la variation crête à crête de cette rugosité est comprise entre 0,1 mm et 2 mm. On peut aussi obtenir une rugosité adéquate en moulant, de manière connue en soi, le secteur avec une toile recouvrant la zone 34 et en arrachant cette toile après moulage. La texture de la toile imprime une rugosité adéquate dans la zone 34, créant un réseau de chemins capables de conduire les inclusions gazeuses vers un orifice 41.

Il vient d'être décrit un premier exemple de mise en œuvre du procédé de collage selon l'invention. Dans ce premier exemple, l'aspiration des inclusions gazeuses se fait grâce à une source de vide ou à une zone où règne une pression inférieure à celle de l'enceinte où se trouve disposé l'assemblage à vulcaniser. La demanderesse a constaté que, dans certains cas, cette zone de moindre pression peut avantageusement être aménagée dans la bande de roulement elle-même sous forme d'au moins un trou borgne, c'est-à-dire ne débouchant pas à la surface de la bande de roulement, pratiqué dans la semelle de la bande de roulement dans une zone assez épaisse pour résister sans s'écraser à la pression régnant dans l'enceinte de vulcanisation, ledit trou borgne prolongeant ledit orifice vers lequel on évacue les inclusions gazeuses.

La figure 12 permet de bien comprendre ce second exemple de mise en œuvre du procédé de collage selon l'invention. On y voit un assemblage à vulcaniser, constitué par une carcasse 1 convenablement préparée, une couche de gomme de liaison 2 et une bande de roulement 3.

La bande de roulement utilisée ici comporte des trous borgnes 9 aménagés sur la semelle 31 de la bande de roulement 3 et donc ne débouchant pas à la surface 35 de la bande de roulement 3. On applique cette bande de roulement 3 sur la carcasse 1 revêtue de la couche 2 de gomme de liaison dans un environnement où règne la pression $p_1$, par exemple la pression atmosphérique. Après pose de la bande de roulement 3, on peut améliorer l'étanchéité adéquate 8. L'ensemble est ensuite introduit dans une enceinte de vulcanisation. La pression $p_2$ régnant dans l'enceinte pendant la vulcanisation est usuellement de l'ordre de 5 bars. Cependant, les trous 9 sont encore à la pression atmosphérique $p_1$. Il en résulte une différence de pression $p_2-p_1$ entre les bords 33 de la bande de roulement 3 et l'orifice 91 des trous 9 débouchant sur la semelle 31 de ladite bande de roulement.

Cette différence de pression crée un effet de succion capable de drainer les gaz vers les orifices 91. Ce procédé de collage s'applique particulièrement bien dans le cas de sculptures très découpées, constituées de blocs de gomme 36 entourés de sculptures profondes 37. Du fait de la faible épaisseur de gomme entre la semelle 31 et le fond de sculpture 37, le fond de sculpture 37 s'écrase sous l'effet de la pression $p_2$ et on retrouve ainsi une différence de pression $p_2-p_1$ permettant de bien diriger l'évacuation des gaz vers les trous borgnes 9. Il faut bien sûr prévoir au moins un trou borgne 9 par bloc 36 entouré de sculptures 37. Le nombre et le volume des trous borgnes 9 dépendent notamment de l'aire de la surface sur laquelle il faut drainer les gaz, de l'épaisseur de la gomme de liaison, ainsi que des différents moyens mis en œuvre pour améliorer le drainage des gaz (principalement le cardage pour obtenir un grain de collage déterminé, mais également tout autre moyen connu de l'homme de l'art). On a constaté qu'il est souhaitable d'avoir un volume cumulé de $5\cdot10^{-6}$ à $5\cdot10^{-4}\,m^3$ de trous borgnes par $m^2$ de surface à drainer. D'autre part, il est souhaitable que le rapport de la profondeur L de trous borgnes 7 à la largeur 1 desdits trous borgnes soit supérieur à 3 $((L/1) \geqslant 3)$. On a constaté que, grâce à ce procédé de collage, on obtient une excellente adhésion entre les corps collés. Lorsque l'on utilise des moyens pour améliorer le drainage des gaz, ils sont, de manière avantageuse, mis en œuvre comme expliqué ci-dessus: les moyens de drainage ne débouchent pas vers les extrémités 21 de la couche de gomme de liaison 2; ils orientent le drainage vers les trous borgnes 9.

Les zones où l'on rencontre encore des bulles de gaz au niveau de l'interface entre les corps collés 1 et 3 sont concentrées sous les trous borgnes 9 au lieu d'être réparties sur toute la surface de contact. Parfois, la gomme de liaison 2 remonte même dans les trous borgnes 9. Tout ceci illustre bien l'effet de succion obtenu, qui dirige les gaz vers les réservoirs en dépression par rapport à l'enceinte dans laquelle se trouve l'empilage à vulcaniser.

L'invention consiste en un procédé de collage qui prévoit essentiellement une nouvelle façon d'organiser le drainage des inclusions gazeuses. Elle s'étend aussi aux corps en caoutchouc adaptés pour l'utilisation dudit procédé, dont la face destinée à être collée comporte une zone centrale de drainage de l'air, des bords latéraux assurant l'étanchéité, ainsi qu'un orifice débouchant dans la zone de drainage. L'invention s'étend encore aux produits obtenus en application du procédé de collage.

## Revendications

1. Procédé de collage d'une face (31) d'un premier corps en caoutchouc (3) sur une face d'un second corps en caoutchouc (1) consistant à

a) appliquer ladite face (31) dudit premier corps en caoutchouc (3) ladite face dudit second corps (1) avec interposition d'une couche (2) de gomme de liaison vulcanisable,

b) évacuer les inclusions gazeuses emprisonnées entre lesdits corps en caoutchouc (3) et (1) et/ou résultant de la réaction de vulcanisation subséquente vers au moins un orifice (41) aménagé sur au moins une desdites faces, ledit orifice étant la base d'une canalisation (4) passant au travers d'au moins un (3) desdits corps en caoutchouc, ladite évacuation se faisant par aspiration au travers de ladite canalisation (4),

c) vulcaniser l'empilage ainsi réalisé, caractérisé en ce que ladite aspiration se fait grâce à un tuyau (6) branché directement à ladite canalisation (4) passant au travers dudit corps (3).

2. Procédé de collage d'une face (31) d'un premier corps en caoutchouc (3) sur une face d'un second corps en caoutchouc (1) consistant à

a) appliquer ladite face dudit premier corps sur ladite face dudit second corps avec interposition d'une couche (2) de gomme de liaison vulcanisable,

b) évacuer les inclusions gazeuses emprisonnées entre lesdits corps en caoutchouc et/ou résultant de la réaction de vulcanisation subséquente,

c) vulcaniser l'empilage ainsi réalisé, caractérisé en ce que

a) on applique ladite face dudit premier corps sur ladite face dudit second corps dans un environnement ou règne une pression $p_1$,

b) on évacue les inclusions gazeuses vers au moins un orifice (91) aménagé sur au moins une desdites faces, ledit orifice (91) étant prolongé par un trou borgne (9), ladite évacuation se faisant dans une enceinte où règne une pression $p_2$ supérieure à la pression $p_1$.

3. Procédé selon l'une des revendications 1 ou 2, caractérisé en ce que, après application dudit premier corps (3) sur ledit second corps (1), une liaison étanche est produite chimiquement ou mécaniquement aux extrémités libres (21) de ladite couche de gomme de liaison.

4. Procédé selon l'une quelconque des revendications 1 à 3, caractérisé en ce que ledit second corps (1) est une carcasse de pneumatique et ledit premier corps (3) est une bande de roulement.

5. Procédé selon l'une quelconque des revendications 1 à 3, caractérisé en ce que ledit second corps (1) est une carcasse de pneumatique et ledit premier corps (3) est une partie de bande de roulement.

6. Corps en caoutchouc (3) dont l'une des faces (31) qui est destinée à être collée sur une face d'un autre corps en caoutchouc (1), comporte des moyens de drainage des inclusions gazeuses, lesdits moyens ne débouchant pas aux bords (33) de ladite face et conduisent à au moins un orifice (91) aménagé sur ladite face destinée à être collée, caractérisé par le fait que ledit orifice est prolongé par un trou borgne (9).

7. Corps en caoutchouc selon la revendication 6, caractérisé en ce que lesdits moyens sont constitués par au moins un réseau de canaux (32) comportant au moins un orifice par réseau.

8. Corps en caoutchouc selon l'une des revendications 6 ou 7, caractérisé en ce que lesdits moyens sont constitués par au moins une zone réalisée en creux (34) par rapport aux dits bords de ladite face, comportant au moins un orifice par zone.

9. Corps en caoutchouc selon l'une des revendications 6 à 8, caractérisé en ce que lesdits moyens sont constitués par au moins une zone dont la surface présente une rugosité, comportant au moins un orifice par zone.

10. Corps en caoutchouc selon la revendication 9, caractérisé en ce que l'amplitude de la variation crête à crête de ladite rugosité est comprise entre 0,1 mm et 2 mm.

11. Corps en caoutchouc selon la revendication 6, caractérisé en ce que le volume cumulé desdits trous borgnes (9) est compris entre $5 \cdot 10^{-6}\,m^3$ et $5 \cdot 10^{-4}\,m^3$ par $m^2$ de surface à drainer.

12. Corps en caoutchouc selon l'une des revendications 6 ou 11, caractérisé en ce que le rapport de la profondeur (L) des trous borgnes (9) à la largeur (1) desdits trous borgnes est supérieur à 3.

13. Corps en caoutchouc selon l'une quelconque des revendications 6 à 12, caractérisé en ce qu'il est une bande de roulement pour enveloppe de pneumatique ou pour bandage élastique.

14. Corps en caoutchouc selon l'une quelconque des revendications 6 à 12, caractérisé en ce qu'il est une partie de bande de roulement pour enveloppe de pneumatique ou pour bandage élastique.

**Patentansprüche**

1. Verfahren zum Verkleben einer Seite (31) eines ersten Körpers aus Kautschuk (3) mit einer Seite eines zweiten Körpers aus Kautschuk (1), bestehend aus dem

a) Aufbringen der genannten Seite (31) des genannten ersten Kautschukkörpers (3) auf die genannte Seite des genannten zweiten Körpers (1) unter Zwischenlegen einer Schicht (2) vulkanisierbaren Verbindungsgummis,

b) Evakuieren der gasförmigen Einschlüsse, die zwischen den genannten Kautschukkörpern (3) und (1) eingeschlossen sind und/oder von der nachfolgenden Vulkanisationsreaktion herrühren, durch zumindest eine Öffnung (41), die in zumindest einer der genannten Seiten vorgesehen ist, wobei die genannte Öffnung die Basis einer Kanalisation (4) ist, die durch zumindest einen der genannten Kautschukkörper (3) führt, wobei die genannte Evakuierung durch Absaugen durch die genannte Kanalisation (4) erfolgt,

c) Vulkanisieren des so erhaltenen Stapels, dadurch gekennzeichnet, dass das genannte Absaugen mittels eines Schlauches (6) erfolgt, der direkt von der genannten Kanalisation (4), die durch den genannten Körper (3) führt, ausgeht.

2. Verfahren zum Verkleben einer Seite (31) eines ersten Kautschukkörpers (3) mit einer Seite eines zweiten Kautschukkörpers (1), darin bestehend, dass

a) die genannte Seite des ersten Körpers auf die genannte Seite des zweiten Körpers unter Zwischenlegen einer Schicht (2) vulkanisierbaren Verbindungsgummis gebracht wird,

b) die zwischen den genannten Kautschukkörpern eingeschlossenen und/oder bei der nachfolgenden Vulkanisationsreaktion entstehenden gasförmigen Einschlüsse evakuiert werden,

c) der so hergestellte Stapel vulkanisiert wird, dadurch gekennzeichnet, dass

a) man die genannte Seite des genannten ersten Körpers auf die genannte Seite des genannten zweiten Körpers in einer Umgebung aufbringt, in der ein Druck $p_1$ herrscht,

b) man die gasförmigen Einschlüsse durch zumindest eine Öffnung (91), die in zumindest einer der genannten Seiten vorgesehen ist, evakuiert, wobei die genannte Öffnung (91) durch ein Sackloch (9) verlängert ist und die genannte Evakuierung in einer Umhüllung geschieht, in der ein Druck $p_2$ herrscht, der grösser ist als der Druck $p_1$.

3. Verfahren nach einem der Ansprüche 1 oder 2, dadurch gekennzeichnet, dass nach der Aufbringung des genannten ersten Körpers (3) auf den genannten zweiten Körper (1) eine dichte Verbindung zwischen den freien Enden (21) der genannten Verbindungsgummischicht chemisch oder mechanisch hergestellt wird.

4. Verfahren nach einem der Ansprüche 1 bis 3, dadurch gekennzeichnet, dass der genannte zweite Körper (1) eine Karkasse eines Luftreifens ist und der genannte erste Körper (3) ein Laufstreifen ist.

5. Verfahren nach einem der Ansprüche 1 bis 3, dadurch gekennzeichnet, dass der genannte zweite Körper (1) eine Karkasse eines Luftreifens ist und der genannte erste Körper (3) ein Teil eines Laufstreifens ist.

6. Kautschukkörper (3), dessen eine Seite (31), die dazu bestimmt ist, mit einer Seite eines anderen Kautschukkörpers (1) verklebt zu werden, zum Abführen der gasförmigen Einschlüsse mit Drainagemitteln versehen ist, die nicht von den Rändern (33) der genannten Seite ausgehen und zu zumindest einer Öffnung (91) führen, die in der genannten Seite vorgesehen ist, gekennzeichnet durch die Tatsache, dass die genannte Öffnung durch ein Sackloch (9) verlängert ist.

7. Kautschukkörper nach Anspruch 6, dadurch gekennzeichnet, dass die genannten Mittel aus zumindest einem Kanalnetz (32) bestehen und zumindest eine Öffnung pro Netz aufweisen.

8. Kautschukkörper nach einem der Ansprüche 6 oder 7, dadurch gekennzeichnet, dass die genannten Mittel aus zumindest einer, bezüglich der genannten Ränder der genannten Seite vertieften, Zone (34) bestehen und zumindest eine Öffnung pro Zone aufweisen.

9. Kautschukkörper nach einem der Ansprüche 6 bis 8, dadurch gekennzeichnet, dass die genannten Mittel aus zumindest einer Zone bestehen, deren Oberfläche eine Rauhheit aufweist und zumindest eine Öffnung pro Zone aufweisen.

10. Kautschukkörper nach Anspruch 9, dadurch gekennzeichnet, dass die Amplitude der Veränderung von Kamm zu Kamm der genannten Rauhheit zwischen 0,1 mm und 2 mm beträgt.

11. Kautschukkörper nach Anspruch 6, dadurch gekennzeichnet, dass das kumulierte Volumen der genannten Sacklöcher (9) zwischen $5 \cdot 10^{-6}\,m^3$ und $5 \cdot 10^{-4}\,m^3$ pro $m^2$ zu drainierender Oberfläche beträgt.

12. Kautschukkörper nach einem der Ansprüche 6 oder 11, dadurch gekennzeichnet, dass das Verhältnis der Tiefe (L) der Sacklöcher (9) zur Breite (1) der genannten Sacklöcher grösser als 3 ist.

13. Kautschukkörper nach einem der Ansprüche 6 bis 12, dadurch gekennzeichnet, dass er ein Laufstreifen für eine Luftstreifenhülle oder für eine elastische Bandage ist.

14. Kautschukkörper nach einem der Ansprüche 6 bis 13, dadurch gekennzeichnet, dass er ein Teil eines Laufstreifens für eine Luftreifenhülle oder für eine elastische Bandage ist.

**Claims**

1. A process of bonding one face (31) of a first body of rubber (3) to one face of a second body of rubber (1) which consists of
a) applying said face (31) of the first body (3) to said face of a second body (1) with interpositioning of a connecting layer (2) of vulcanizable rubber,
b) evacuating gaseous inclusions imprisoned between the rubber bodies [(3) and (1)] and/or resulting from a subsequent vulcanization reaction towards at least one orifice (41) provided in at least one of said faces, said orifice being the base of a conduit (4) which passes through at least one (3) of the rubber bodies, the evacuation of the gaseous inclusions being effected by suction through the conduit,
c) vulcanizing the resultant assembly,
characterized by the fact that said suction is performed by means of a hose (6) connected directly to said conduit (4) which passes through said body (3).

2. A process of bonding one face (31) of a first body of rubber (3) to one face of a second body of rubber (1) which consists of
a) applying said face of the first body to said face of the second body with interpositioning of a connecting layer (2) of vulcanizable rubber,
b) evacuating gaseous inclusions imprisoned between the rubber bodies and/or resulting from a subsequent vulcanization reaction,
c) vulcanizing the resultant assembly,
characterized by the fact that
a) said face of the first body is applied on said face of the second body, in an environment in which a pressure $p_1$ prevails,
b) the evacuation of the gaseous inclusions towards at least one orifice (91) provided in at least one of said faces, said orifice (91) being extended by a dead-end hole (9), is effected in an enclosure in which there prevails a pressure $p_2$ greater than the pressure $p_1$.

3. A process according to any one of claims 1 to 2, characterized by the fact that after application of said face of the first body (3) to said face of the second body (1) a tight connection is produced chemically or mechanically at the free ends (21) of the connecting layer of vulcanizable rubber.

4. A process according to any one of claims 1 to 3, characterized by the fact that the second body (1) is a tire carcass and the first body (3) is a tire tread.

5. A process according to any one of claims 1 to 3, characterized by the fact that the second body (1) is a tire carcass and the first body (3) is a part of a tire tread.

6. A body of rubber (3), one of the faces (31) of which, being intended to be bonded onto one face of another body of rubber (1), comprising means for the drainage of gaseous inclusions, the drainage means not debouching at the edges (33) of said face intended to be bonded and leading to at least one orifice (91) provided in said face, characterized by the fact that the orifice is extended by a dead-end hole (9).

7. A body of rubber according to claim 6, characterized by the fact that the drainage means consist of at least one network of channels (32) comprising at least one orifice per network.

8. A body of rubber according to claim 6 or 7, characterized by the fact that the drainage means are formed by at least one zone (34) recessed with respect to the edges of said face intended to be bonded and comprising at least one orifice per zone.

9. A body of rubber according to any one of claims 6 to 8, characterized by the fact that the drainage means are formed by at least one zone, the surface of which has a roughness and comprising at least one orifice per zone.

10. A body of rubber according to claim 9, characterized by the fact that the amplitude of the crest-to-crest variation of the roughness is between 0.1 mm and 2 mm.

11. A body of rubber according to claim 6, characterized by the fact that the cumulative volume of the dead-end holes (9) is between $5 \cdot 10^{-6}\,m^3$ and $5 \cdot 10^{-4}\,m^3$ per $m^2$ of surface to be drained.

12. A body of rubber according to claim 9 or 14, characterized by the fact that the ratio of the depth (L) of the dead-end holes to the width (1) of the dead-end holes is greater than 3.

13. A body of rubber according to any one of claims 6 to 12, characterized by the fact that it is a tire tread for a pneumatic tire or an elastic tire.

14. A body of rubber according to any one of claims 6 to 12, characterized by the fact that it is a part of a tire tread for a pneumatic tire or an elastic tire.

0159537

FIG.1

FIG.2

FIG.3

Coupe suivant AA

9

0159537

FIG.4

FIG.5

FIG.6

FIG.7

FIG.8

FIG.9

FIG.11

coupe suivant BB

FIG.10

FIG. 12